(19) Europäisches Patentamt
European Patent Office
Office européen des brevets

(11) **EP 4 631 814 A1**

(12) **EUROPEAN PATENT APPLICATION**
published in accordance with Art. 153(4) EPC

(43) Date of publication:
15.10.2025 Bulletin 2025/42

(21) Application number: 23900600.0

(22) Date of filing: 04.12.2023

(51) International Patent Classification (IPC):
B60W 30/10 (2006.01)      B60W 30/165 (2020.01)
B60W 40/02 (2006.01)      B60W 40/04 (2006.01)
B60W 40/072 (2012.01)      B60W 40/114 (2012.01)

(52) Cooperative Patent Classification (CPC):
B60W 30/10; B60W 30/165; B60W 40/02;
B60W 40/04; B60W 40/072; B60W 40/114

(86) International application number:
PCT/JP2023/043223

(87) International publication number:
WO 2024/122485 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.12.2022 JP 2022195813

(71) Applicant: Astemo, Ltd.
Tokyo 100-0004 (JP)

(72) Inventors:
• IBA, Tatsuya
Hitachinaka-shi, Ibaraki 312-8503 (JP)
• UENO, Kentaro
Hitachinaka-shi, Ibaraki 312-8503 (JP)

(74) Representative: Hoefer & Partner Patentanwälte mbB
Pilgersheimer Straße 20
81543 München (DE)

(54) **VEHICLE CONTROL DEVICE, VEHICLE CONTROL METHOD, AND VEHICLE CONTROL SYSTEM**

(57)    In an aspect of a vehicle control device, a vehicle control method, and a vehicle control system according to the present invention, in a case in which a preceding vehicle running ahead of a host vehicle is present when a host vehicle running route on which the host vehicle runs is obtained based on a road shape on which the host vehicle runs and an index related to movement of the host vehicle in forward information about the host vehicle, the host vehicle running route is obtained using information related to a running position or a running history of the preceding vehicle in the forward information. This configuration enables both of comfortable ride quality of the host vehicle and a capability of the host vehicle to naturally follow the preceding vehicle to be satisfied.

FIG.3

**Description**

TECHNICAL FIELD

The present invention relates to a vehicle control device, to a vehicle control method, and to a vehicle control system.

BACKGROUND ART

A running assistance method of Patent Document 1 generates a host vehicle running route based on a location of a host vehicle and map information, computes first reliability indicating reliability of the host vehicle running route, generates a preceding vehicle running route, computes second reliability indicating reliability of the preceding vehicle running route based on a shape of the preceding vehicle running route, computes an integration proportion for integrating the host vehicle running route and the preceding vehicle running route based on the first reliability and the second reliability, and integrates the host vehicle running route and the preceding vehicle running route in the integration proportion, thereby computing a target running route of the host vehicle.

REFERENCE DOCUMENT LIST

PATENT DOCUMENT

Patent Document 1: WO 2020/002964

SUMMARY OF THE INVENTION

PROBLEM TO BE SOLVED BY THE INVENTION

When a vehicle control device obtains a running route of a host vehicle, ride quality of the host vehicle can be improved by considering indexes related to movement of the host vehicle, such as an acceleration and a jerk of the host vehicle.

However, in a case in which a preceding vehicle running ahead of the host vehicle is present, ignoring a running route of the preceding vehicle and applying a running route in which the indexes related to movement of the host vehicle are considered cause a deviation between the running route of the host vehicle and the running route of the preceding vehicle. This might give a passenger of the host vehicle senses of discomfort and anxiety.

On the other hand, the effect of improving ride quality cannot be obtained if control is exerted so as to cancel setting of the running route in which the indexes related to movement of the host vehicle are considered and cause the host vehicle to trace the running route of the preceding vehicle in the case in which the preceding vehicle is present.

The present invention has been made in view of conventional actual circumstances and has an object to provide a vehicle control device, a vehicle control method, and a vehicle control system that enable both comfortable ride quality of a host vehicle and a capability of the host vehicle to naturally follow a preceding vehicle to be satisfied.

MEANS FOR SOLVING THE PROBLEM

In an aspect of a vehicle control device, a vehicle control method, and a vehicle control system according to the present invention, in a case in which a preceding vehicle running ahead of a host vehicle is present when a host vehicle running route on which the host vehicle runs is obtained based on a road shape on which the host vehicle runs and an index related to movement of the host vehicle in forward information about the host vehicle, the host vehicle running route is obtained using information related to a running position or a running history of the preceding vehicle in the forward information.

EFFECTS OF THE INVENTION

According to the present invention, both comfortable ride quality of a host vehicle and a capability of the host vehicle to naturally follow a preceding vehicle can be satisfied.

BRIEF DESCRIPTION OF THE DRAWINGS

FIG. 1 is a block diagram showing a vehicle control system.

FIG. 2 is a diagram illustrating a term in which running of the preceding vehicle is considered.

FIG. 3 is a functional block diagram of a trajectory generation processing unit.

FIG. 4 is a flowchart showing a process of generating a target trajectory.

FIG. 5 is a diagram showing indexes of a meandering running tendency or a lane deviation tendency of a preceding vehicle.

FIG. 6 is a diagram showing indexes of the meandering running tendency or the lane deviation tendency of a preceding vehicle.

FIG. 7 is a flowchart showing a process of setting weightings on a term in which running of a preceding vehicle is considered.

FIG. 8 is a diagram illustrating a correlation between inter-vehicle distance and weighting on the term in which running of a preceding vehicle is considered.

FIG. 9 is a diagram illustrating a correlation between inter-vehicle distance and weighting on the term in which running of a preceding vehicle is considered.

FIG. 10 is a diagram illustrating a correlation between inter-vehicle distance and weighting on the term in which running of a preceding vehicle is considered.

FIG. 11 is a diagram illustrating a correlation between relative vehicle speed and weighting on the term in which running of a preceding vehicle is considered.

FIG. 12 is a diagram showing an expression of trajectory points with a difference equation.

FIG. 13 is a diagram illustrating differences in target trajectory depending on inter-vehicle distance.

FIG. 14 is a diagram showing differences in acceleration and jerk depending on the trajectory of a preceding vehicle and a target trajectory in which movement of the host vehicle is considered.

FIG. 15 is a diagram for describing a speed plan in follow-up of a preceding vehicle.

FIG. 16 is a diagram for describing satisfaction of both of follow-up of a preceding vehicle and ride quality.

FIG. 17 is a diagram showing a situation in which cut-in occurs between the host vehicle and a preceding vehicle.

FIG. 18 is a diagram showing changes in upper limit vehicle speed before and after cut-in occurs.

FIG. 19 is a flowchart showing a process of integrating a first running route and a second running route.

FIG. 20 is a diagram illustrating differences in target trajectory depending on inter-vehicle distance.

## MODE FOR CARRYING OUT THE INVENTION

Hereinafter, an embodiment of a vehicle control device, a vehicle control method, and a vehicle control system according to the present invention will be described based on the drawings.

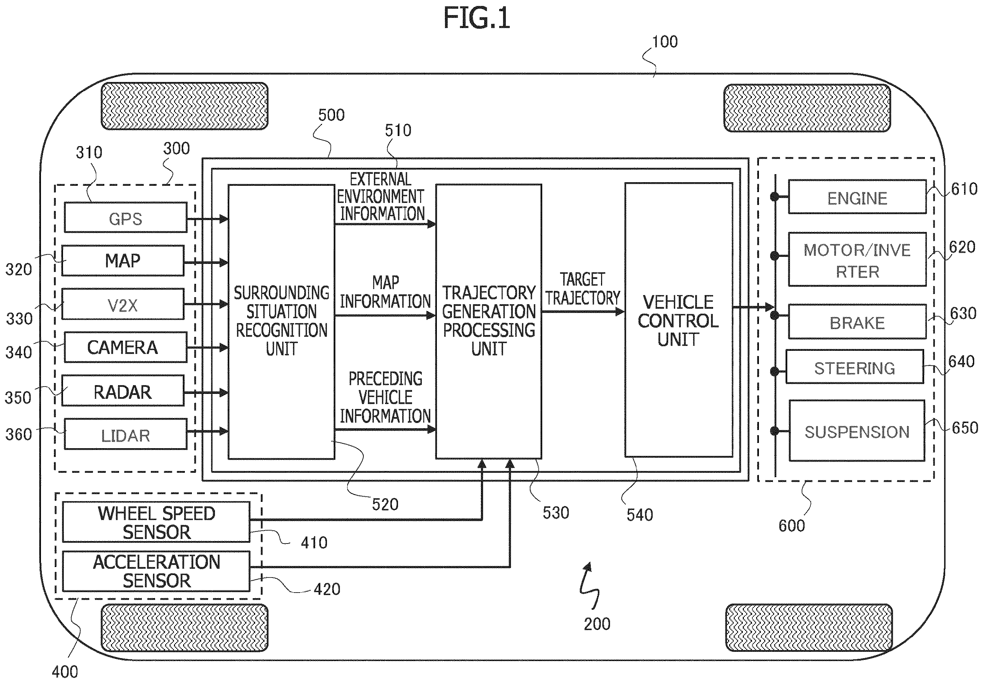

FIG. 1 is a block diagram showing an aspect of a vehicle control system 200 to be mounted in a vehicle 100.

Vehicle control system 200 is a system that controls movement of vehicle 100.

Specifically, vehicle control system 200 generates a running route (hereinafter referred to as a host vehicle running route) of vehicle 100, which is the host vehicle, and outputs a control signal for controlling a steering angle and a braking and driving force of vehicle 100 such that vehicle 100 runs while following up the generated host vehicle running route.

Vehicle control system 200 includes an external environment recognition unit 300, a vehicle movement detection unit 400, a vehicle control device 500, and a vehicle actuator unit 600.

External environment recognition unit 300 is a device that acquires external environment information about vehicle 100.

External environment recognition unit 300 includes a global positioning system (GPS) receiving unit 310, a map database 320, a road-to-vehicle communication device 330, a camera 340, a radar 350, and a light detection and ranging or laser imaging detection and ranging (LiDAR) 360.

GPS receiving unit 310 receives a signal from a GPS satellite to measure a longitude and a latitude of the position of vehicle 100.

Map database 320 is formed in a storage device mounted in vehicle 100.

Map information in map database 320 includes information such as a road location, a road shape, and an intersection location.

Road-to-vehicle communication device 330 transmits information about vehicle 100 to a roadside device and receives road traffic information such as a curve and an intersection from the roadside device.

Camera 340 is a stereo camera, a monocular camera, a 360-degree camera, or the like, and captures an image of the surroundings of vehicle 100 to acquire image information about the surroundings of vehicle 100.

Radar 350 and LiDAR 360 detect an object around vehicle 100 and outputs information related to the detected object.

Note that the various sensors constituting external environment recognition unit 300 are not limited to the above-described combination and can be combined as appropriate in accordance with a vehicle form or the like.

Vehicle movement detection unit 400 includes a wheel speed sensor 410, an acceleration sensor 420, and the like.

Wheel speed sensor 410 is a sensor that detects a rotation speed of each wheel of vehicle 100, and a result of detection performed by wheel speed sensor 410 is used for a computation for estimating a running speed (hereinafter referred to as a vehicle speed) of vehicle 100.

Acceleration sensor 420 detects various accelerations in a behavior of vehicle 100, such as a longitudinal acceleration, lateral acceleration, vertical acceleration, yaw rate, pitch rate, roll rate, and lateral jerk of vehicle 100.

Vehicle control device 500 is an electronic control device including a microcomputer 510 as a control unit that performs a computation based on input information and outputs a result of the computation.

Microcomputer 510 includes a microprocessor unit (MPU), a read only memory (ROM), a random access memory (RAM), and the like.

Microcomputer 510 acquires various external environment recognition signals from external environment recognition unit 300, and acquires a vehicle movement detection signal about the vehicle speed, various accelerations of vehicle 100, and the like from vehicle movement detection unit 400.

Microcomputer 510 then generates a host vehicle running route based on the acquired various types of information, and outputs, to vehicle actuator unit 600, various actuator control commands for causing vehicle 100 to follow the host vehicle running route.

Vehicle actuator unit 600 includes an internal combustion engine 610 and a motor 620 that generates a driving force of vehicle 100, a braking device 630 that provides a braking force for each wheel of vehicle 100, an electronic control power steering device 640 that steers the front wheels of vehicle 100 to change a traveling direction of vehicle 100, an electronic control suspension 650 capable of adjusting a damping force and a vehicle height, and the like.

Note that activation of motor 620 as a power generator enables a braking force, that is, a regenerative braking force, to be exerted on vehicle 100.

Vehicle actuator unit 600 then generates a driving force, a braking force, a steering force, or the like in accordance with an actuator control command from microcomputer 510.

Microcomputer 510 includes a surrounding situation recognition unit 520, a trajectory generation processing unit 530, and a vehicle control unit 540 as functional units for obtaining the host vehicle running route and outputting an actuator control command for causing vehicle 100 to follow the host vehicle running route.

Surrounding situation recognition unit 520 (a forward information acquisition unit) acquires various external environment recognition signals from external environment recognition unit 300, recognizes a situation around vehicle 100 based on the acquired external environment recognition signals, and outputs forward information about vehicle 100 including the external environment information, map information, preceding vehicle information, and the like.

The external environment information output from surrounding situation recognition unit 520 includes obstacle information and the like in addition to road shape-related information, such as lane information and information about a centerline.

The map information output from surrounding situation recognition unit 520 includes road shape-related information, such as information about a road curvature and information about the centerline.

The preceding vehicle information output from surrounding situation recognition unit 520 includes information related to a running position or a running history of a preceding vehicle running ahead of vehicle 100. Surrounding situation recognition unit 520 recognizes a yaw angle of the preceding vehicle, a relative vehicle speed of the preceding vehicle and vehicle 100, a relative yaw rate of the preceding vehicle and vehicle 100, and the like for output as the preceding vehicle information.

Here, surrounding situation recognition unit 520 merges the information from the above-described various sensors to generate forward information to be used for vehicle control.

For example, surrounding situation recognition unit 520 combines obstacle information recognized by camera 340 and obstacle information recognized by LiDAR 360 to generate obstacle information as the external environment information.

Surrounding situation recognition unit 520 also merges a plurality of types of sensor information to generate the map information, the preceding vehicle information, and the like as information to be used for vehicle control.

Trajectory generation processing unit 530 acquires external environment recognition signals about the external environment information, the map information, the preceding vehicle information, and the like from surrounding situation recognition unit 520, and acquires movement detection signals about vehicle 100 from vehicle movement detection unit 400.

Trajectory generation processing unit 530 then generates a target trajectory (in other words, a target trajectory) as the host vehicle running route based on the acquired various types of information.

Vehicle control unit 540 acquires information about the target trajectory generated by trajectory generation processing unit 530.

Vehicle control unit 540 then computes a control command for causing vehicle 100 to follow the target trajectory, and outputs the computed control command to vehicle actuator unit 600.

In a case in which a preceding vehicle running ahead of vehicle 100 is present when the target trajectory is obtained based on the road shape on which vehicle 100 runs and indexes related to movement of vehicle 100 in the forward information, trajectory generation processing unit 530 uses the preceding vehicle running information related to the running position or the running history of the preceding vehicle in the forward information.

The indexes related to movement of vehicle 100, which are used by trajectory generation processing unit 530 when generating the target trajectory, are physical quantities related to the accelerations of vehicle 100, such as the acceleration and jerk of the host vehicle, for example.

Here, the target trajectory based on the road shape and the indexes related to movement of vehicle 100 is a trajectory that can reduce the acceleration and jerk of vehicle 100 and can achieve comfortable ride quality of vehicle 100 within a runnable region.

In the case in which a preceding vehicle is present, by considering the preceding vehicle running information related to the running position or the running history of the preceding vehicle, trajectory generation processing unit 530 brings the target trajectory closer to the trajectory of the preceding vehicle (in other words, a preceding vehicle running route) from the trajectory that can achieve comfortable ride quality of vehicle 100 and satisfies both of ride quality of vehicle 100 and the capability of vehicle 100 to naturally follow the preceding vehicle.

Note that trajectory generation processing unit 530 sets the runnable region as a region in which vehicle 100 can be caused to run based on the road shape, the obstacle information, and the like.

Information about the runnable region can include information about upper limit values or lower limit values of the indexes related to movement of vehicle 100 (such as the vehicle speed, acceleration, and jerk) at a predetermined position within the runnable region.

If vehicle 100 is caused to run along the target trajectory in which the acceleration or jerk is reduced ignoring the preceding vehicle in the case in which the preceding vehicle is present, a deviation occurs between the trajectory of vehicle 100 and the trajectory of the preceding vehicle. This might give a passenger of vehicle 100 senses of discomfort and anxiety.

Thus, in the case in which the preceding vehicle is present, trajectory generation processing unit 530 carries out trajectory transition processing of bringing the target trajectory as the host vehicle running route closer to the trajectory of the preceding vehicle from the trajectory in which the acceleration or jerk is reduced, and as a result, reduces the senses of discomfort and anxiety of the passenger of vehicle 100.

Here, the senses of discomfort and anxiety the passenger of vehicle 100 feels vary depending on an inter-vehicle distance which is the distance between vehicle 100 and the preceding vehicle, or the like.

Thus, trajectory generation processing unit 530 changes the degree of causing the target trajectory to transition in accordance with the forward information such as the inter-vehicle distance.

Accordingly, ride quality of vehicle 100 can be improved as much as possible while reducing the senses of discomfort and anxiety of the passenger of vehicle 100.

Hereinafter, processing for generating the target trajectory, which is performed by trajectory generation processing unit 530, will be described in more detail.

Trajectory generation processing unit 530 obtains the target trajectory by adding, to the road shape and the indexes related to movement of vehicle 100, the preceding vehicle running information related to the running position or the running history of the preceding vehicle as a computation condition.

In other words, trajectory generation processing unit 530 uses, as indexes for generating the target trajectory, a term based on the road shape, a term related to movement of vehicle 100, and a term in which running of the preceding vehicle is considered.

Here, the term based on the road shape includes indexes as follows, for example:

- ensuring a distance between a road shoulder and vehicle 100;
- ensuring a distance between an obstacle and vehicle 100; and
- bringing the running route closer to the center of a lane.

The term related to movement of vehicle 100 includes indexes as follows, for example:

- decreasing an acceleration of vehicle 100;
- decreasing a jerk of vehicle 100; and
- decreasing a turning curvature of vehicle 100.

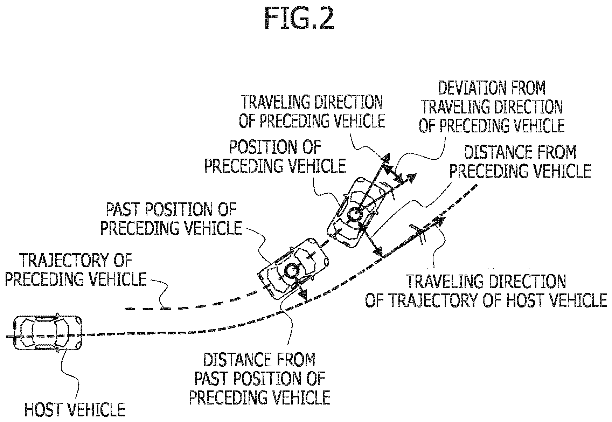

FIG. 2 is a diagram illustrating the term in which running of the preceding vehicle is considered, that is, a term based on the information related to the running position or the running history of the preceding vehicle.

The term in which running of the preceding vehicle is considered includes indexes for bringing the target trajectory of vehicle 100 closer to the trajectory of the preceding vehicle (in other words, a running track of the preceding vehicle) as follows, for example:

- bringing the distance (a lateral deviation amount) between vehicle 100 and the preceding vehicle closer to zero;
- bringing the distance (a lateral deviation amount) between vehicle 100 and a preceding vehicle in the past closer to zero;
- bringing a deviation of a traveling direction of the target trajectory from the traveling direction of the preceding vehicle closer to zero; and
- bringing a deviation between the trajectory of the preceding vehicle and the target trajectory closer to zero.

Furthermore, trajectory generation processing unit 530 changes a weighting on the term in which running of the preceding vehicle is considered (in other words, the information related to the running position or the running history of the preceding vehicle), in other words, the degree of bringing the target trajectory closer to the trajectory of the preceding vehicle, based on indexes as follows:

- relative information with respect to the preceding vehicle (such as the inter-vehicle distance and relative vehicle speed);
- road recognition information (accuracy of road recognition);
- a meandering running or lane deviation tendency of the preceding vehicle; and
- a road shape (such as a road curvature).

Note that increasing the weighting on the term in which running of the preceding vehicle is considered relatively decreases weightings on the term based on the road shape and the term related to movement of vehicle 100, and reducing the weighting on the term in which running of the preceding vehicle is considered relatively increases the weightings on the term based on the road shape and the term related to movement of vehicle 100.

Here, trajectory generation processing unit 530 increases the weighting on the term in which running of the preceding vehicle is considered as the inter-vehicle distance decreases, and increases the weighting on the term in which running of the preceding vehicle is considered as the preceding vehicle is slower than vehicle 100.

The passenger of vehicle 100 feels a sense of anxiety in recognition of the preceding vehicle and the follow-up capability obtained by vehicle control if vehicle 100 runs on a trajectory different from that of the preceding vehicle.

Thus, trajectory generation processing unit 530 increases the weighting on the term in which running of the preceding vehicle is considered (in other words, a weighting on processing of conforming the target trajectory to the trajectory of the preceding vehicle) to conform the target trajectory of vehicle 100 to the trajectory of the preceding vehicle, and as a result, cases senses of anxiety and discomfort of the passenger of vehicle 100.

That is, when generating the target trajectory, trajectory generation processing unit 530 changes weighting as to whether to give priority to an index (in other words, ride quality) such as decreasing the acceleration of vehicle 100 or to conform the target trajectory to the trajectory of the preceding vehicle in accordance with the forward information such as the inter-vehicle distance.

For example, in the case in which a preceding vehicle is present ahead of vehicle 100, a trajectory plan with comfortable ride quality based on an index such as decreasing the acceleration of vehicle 100 will become invalid if vehicle 100 is only caused to follow the preceding vehicle.

Thus, in the case in which a preceding vehicle is present, trajectory generation processing unit 530 enables vehicle 100 to run on a trajectory close to the trajectory of the preceding vehicle while keeping comfortable ride quality provided by the target trajectory generated based on an index such as decreasing the acceleration, and as a result, satisfies both of follow-up of the preceding vehicle without causing a sense of discomfort and ride quality.

Hereinafter, processing of generating the target trajectory, which is performed by microcomputer 510 (trajectory generation processing unit 530), will be described in detail.

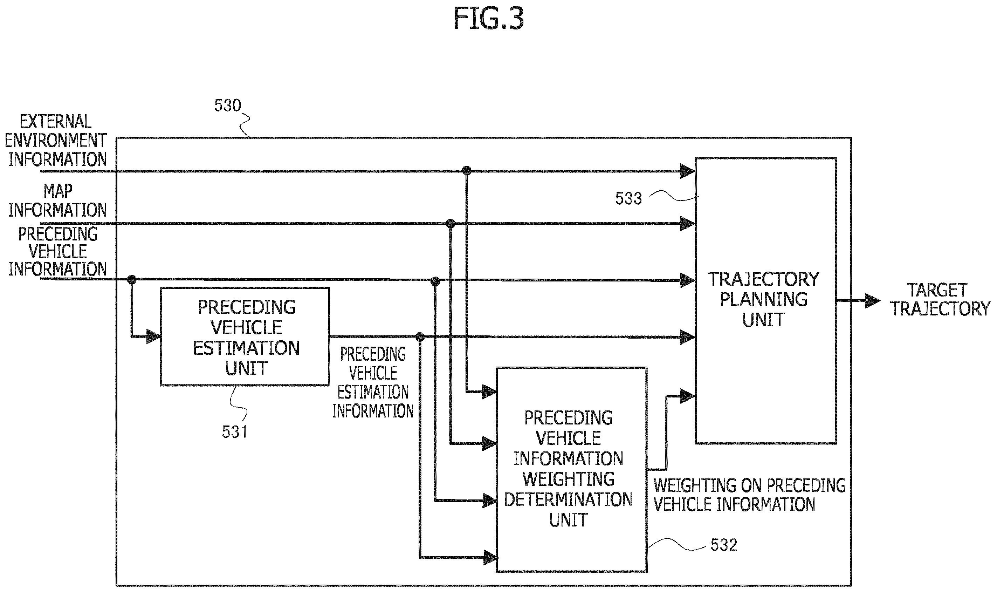

FIG. 3 is a functional block diagram of trajectory generation processing unit 530.

Trajectory generation processing unit 530 has respective functional units of a preceding vehicle estimation unit 531, a preceding vehicle information weighting determination unit 532, and a trajectory planning unit 533.

Preceding vehicle estimation unit 531 carries out state estimation of the preceding vehicle based on the preceding vehicle information acquired from surrounding situation recognition unit 520.

The preceding vehicle information includes information such as the position of the preceding vehicle, the yaw angle of the preceding vehicle, a relative vehicle speed of the preceding vehicle with respect to vehicle 100, and the relative yaw rate of the preceding vehicle with respect to vehicle 100 which have been recognized based on information from external environment recognition sensors such as camera 340 and LiDAR 360.

Note that microcomputer 510 can acquire the preceding vehicle information such as the position of the preceding vehicle from the preceding vehicle through vehicle-to-vehicle communication between vehicle 100 and the preceding vehicle.

The state estimation of the preceding vehicle includes behavior estimation of the preceding vehicle and estimation of a past position of the preceding vehicle. The behavior estimation of the preceding vehicle includes estimation of a meandering tendency of the preceding vehicle and estimation of a lane deviation tendency of the preceding vehicle.

Note that estimation of the meandering tendency of the preceding vehicle and estimation of the lane deviation tendency of the preceding vehicle will be described later in detail.

Preceding vehicle information weighting determination unit 532 acquires the external environment information, the map information, and the preceding vehicle information from surrounding situation recognition unit 520, and acquires preceding vehicle estimation information including information about the behavior estimation of the preceding vehicle and information about the estimation of the past position of the preceding vehicle from preceding vehicle estimation unit 531.

Preceding vehicle information weighting determination unit 532 then determines a weighting on the preceding vehicle information (specifically, the information related to the running position or the running history of the preceding vehicle) to be used when trajectory planning unit 533 obtains the target trajectory, that is, the weighting on the term in which running of the preceding vehicle is considered, based on the acquired various types of information.

Trajectory planning unit 533 acquires the external environment information, the map information, and the preceding vehicle information from surrounding situation recognition unit 520, acquires the preceding vehicle estimation information from preceding vehicle estimation unit 531, and acquires information about the weighting on the preceding vehicle information from preceding vehicle information weighting determination unit 532.

Trajectory planning unit 533 then generates the target trajectory of vehicle 100 based on the acquired various types of information and outputs information about the generated target trajectory to vehicle control unit 540.

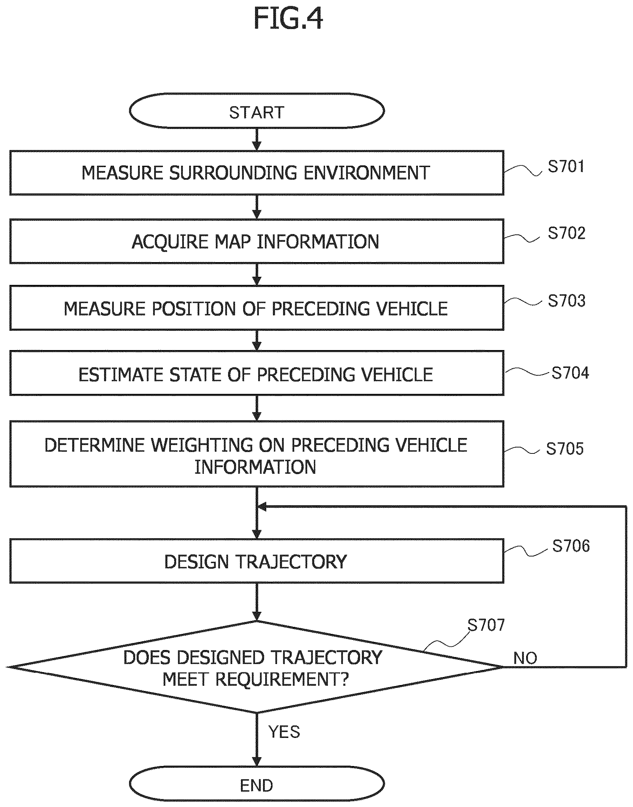

FIG. 4 is a flowchart showing a main routine of the processing of generating the target trajectory, which is performed by microcomputer 510 (trajectory generation processing unit 530).

In step S701, microcomputer 510 recognizes a situation around vehicle 100 (in other words, a surrounding environment).

Specifically, microcomputer 510 recognizes the situation around vehicle 100 including the lane information, the obstacle information, the information about the centerline, and the like based on information from the external environment recognition sensors such as camera 340 and LiDAR 360.

Then, in step S702, microcomputer 510 acquires the map information.

Specifically, microcomputer 510 acquires the road curvature, the information about the centerline, and the like as the map information from a high-precision map, information from a car navigation system, and the like.

Furthermore, in next step S703, microcomputer 510 acquires the preceding vehicle information such as the position of the preceding vehicle.

Specifically, microcomputer 510 acquires the preceding vehicle information such as the position of the preceding vehicle, the yaw angle of the preceding vehicle, the relative vehicle speed of the preceding vehicle with respect to vehicle 100, and the relative yaw rate of the preceding vehicle with respect to vehicle 100 based on the information from the external environment recognition sensors such as camera 340 and LiDAR 360.

Then, in step S704 (preceding vehicle estimation unit 531), microcomputer 510 carries out the state estimation of the preceding vehicle.

Here, the state estimation of the preceding vehicle includes the behavior estimation of the preceding vehicle and the estimation of a past position of the preceding vehicle. The behavior estimation of the preceding vehicle includes estimation of the meandering tendency of the preceding vehicle and estimation of the lane deviation tendency of the preceding vehicle.

Note that the meandering tendency refers to a state in which the preceding vehicle runs in a meandering manner irrespective of the road shape.

The lane deviation tendency refers to a state in which the preceding vehicle exhibits a behavior like deviating from a lane rather than running along the lane.

That is, the meandering tendency of the preceding vehicle and the lane deviation tendency of the preceding vehicle are states in which the preceding vehicle is running on a trajectory which is not preferable for vehicle 100 to follow.

In step S704, microcomputer 510 can identify that the tendency that the preceding vehicle is meandering or the tendency that the preceding vehicle is going to deviate from a lane is greater as the following numeric values (1) to (6) are larger, for example.

Microcomputer 510 can also identify the meandering running tendency of the preceding vehicle or the lane deviation tendency of the preceding vehicle from any one of, or a combination of some of, the numeric values (1) to (6).

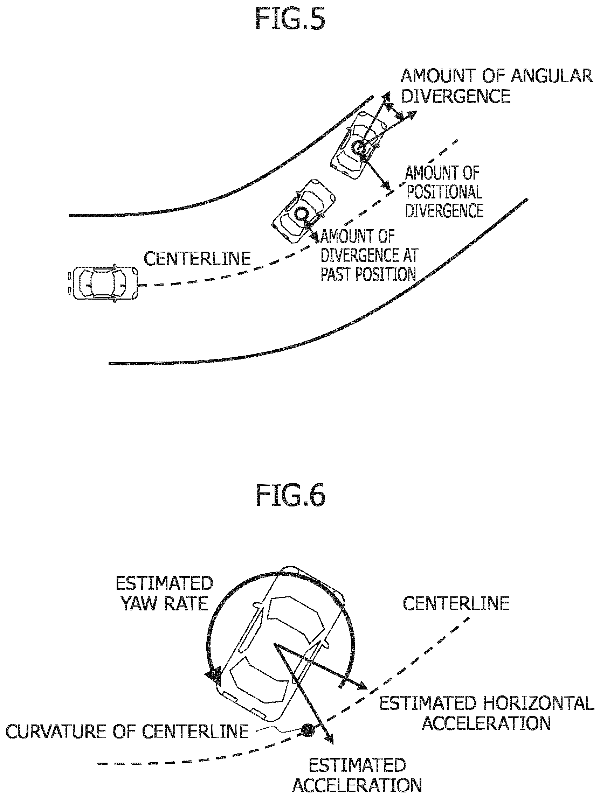

Note that FIG. 5 shows the numeric values (1) to (3), and FIG. 6 shows the numeric values (4) and (5).

(1) An amount of divergence between the position of the preceding vehicle and the centerline (see FIG. 5).
(2) An amount of divergence between the traveling direction of the preceding vehicle and a tangential direction of the centerline (see FIG. 5).

(3) An amount of divergence between a past position of the preceding vehicle and the centerline (see FIG. 5).

(4) Magnitudes of physical quantities indicating horizontal movement of the preceding vehicle, such as an estimate value of a lateral acceleration and an estimate value of a yaw rate of the preceding vehicle (see FIG. 6).

(5) An amount of divergence between the estimate value of the lateral acceleration of the preceding vehicle and a reference lateral acceleration based on a curvature of the centerline (road curvature) (see FIG. 6).

(6) A probability representing a possibility of meandering running or lane deviation of the preceding vehicle, evaluated by artificial intelligence (AI) or the like.

Note that in step S704, microcomputer 510 can identify the meandering running tendency of the preceding vehicle or the lane deviation tendency of the preceding vehicle utilizing information about lighting of a direction indicator of the preceding vehicle, or the like.

In step S705 (preceding vehicle information weighting determination unit 532), microcomputer 510 determines a weighting on the preceding vehicle information based on the forward information such as the inter-vehicle distance which is the distance between vehicle 100 and the preceding vehicle.

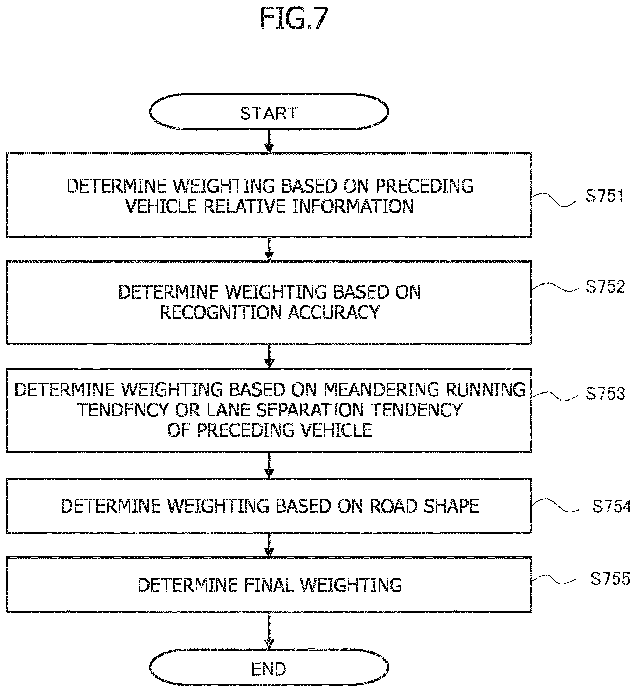

The flowchart of FIG. 7 shows weighting determining processing in step S705 in detail.

In step S751, microcomputer 510 determines the weighting on the preceding vehicle information based on relative information between vehicle 100 and the preceding vehicle, such as the inter-vehicle distance and the relative vehicle speed.

Here, microcomputer 510 decreases the weighting in a case in which the inter-vehicle distance, which is the distance between vehicle 100 and the preceding vehicle, is long (in other words, in a case in which the preceding vehicle is far from vehicle 100) than in a case in which the inter-vehicle distance is short, and increases the weighting in the case in which the inter-vehicle distance is short (in other words, in a case in which the preceding vehicle is close to vehicle 100) than in the case in which the inter-vehicle distance is long.

That is, microcomputer 510 decreases the weighting on the preceding vehicle information as the inter-vehicle distance is larger.

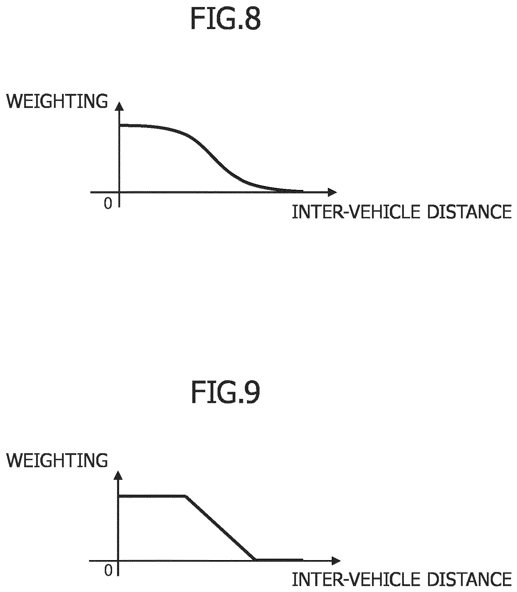

FIG. 8 to FIG. 10 are diagrams each illustrating a correlation pattern between the weighting on the preceding vehicle information and the inter-vehicle distance.

Microcomputer 510 can determine the weighting on the preceding vehicle information based on the inter-vehicle distance with a characteristic as shown in any of FIG. 8 to FIG. 10, for example, or the like.

In the case of the characteristic of FIG. 8, microcomputer 510 changes the weighting to decrease while gradually changing the rate of change in weighting with respect to an increasing change in inter-vehicle distance.

In the case of the characteristic of FIG. 9, microcomputer 510 holds the weighting constant until the inter-vehicle distance exceeds a set value, and when the inter-vehicle distance exceeds the set value, decreases the weighting at a constant speed with respect to an increasing change in inter-vehicle distance.

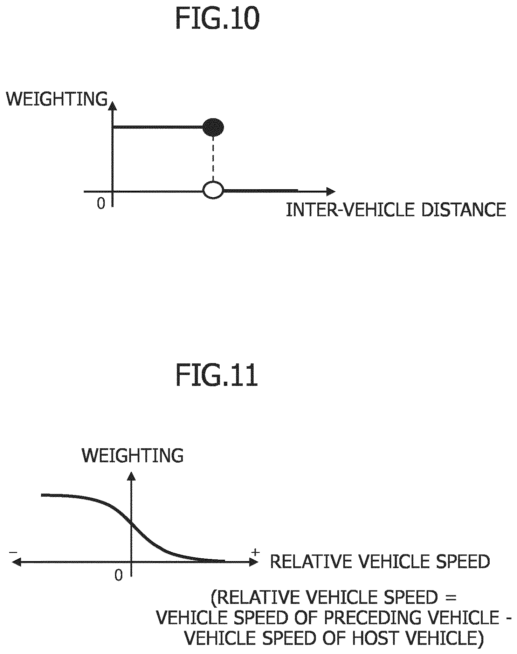

In the case of the characteristic of FIG. 10, microcomputer 510 switches the weighting to either of two values depending on whether the inter-vehicle distance is larger than a threshold value.

Note that microcomputer 510 can also change the weighting with the characteristics as illustrated in FIG. 8 to FIG. 10, that is, in the pattern of gradually changing the rate of change in weighting, the pattern of holding the rate of change in weighting constant, the pattern of switching the weighting stepwise, or the like when determining the weighting based on other indexes, which will be shown below.

In step S751, microcomputer 510 determines the weighting on the preceding vehicle information based on the relative vehicle speed of the preceding vehicle and vehicle 100.

In the present application, the relative vehicle speed shall be expressed as "relative vehicle speed = speed of preceding vehicle - speed of host vehicle."

Microcomputer 510 then decreases the weighting on the preceding vehicle information as the relative vehicle speed is higher, in other words, as the speed of the preceding vehicle is higher than that of vehicle 100, and increases the weighting on the preceding vehicle information as the relative vehicle speed is lower, in other words, as the speed of the preceding vehicle is slower than vehicle 100.

FIG. 11 is a diagram illustrating a correlation between the weighting on the preceding vehicle information and the relative vehicle speed, and is an example of employing the characteristic in which the rate of change in weighting with respect to the change in relative vehicle speed gradually changes.

When the relative vehicle speed is negative and the speed of the preceding vehicle is lower than the speed of vehicle 100, microcomputer 510 increases the weighting on the preceding vehicle information as compared to when the relative vehicle speed is positive and the speed of the preceding vehicle is faster than vehicle 100.

The state in which the relative vehicle speed is negative and the speed of the preceding vehicle is lower than that of vehicle 100 is a state in which the inter-vehicle distance decreases, and the weighting on the preceding vehicle information is increased similarly to the characteristic of setting the weighting based on the inter-vehicle distance.

The passenger of vehicle 100 is more likely to feel a deviation between the trajectory of vehicle 100 and the trajectory of the preceding vehicle as a sense of discomfort as the inter-vehicle distance is smaller.

Thus, microcomputer 510 increases the weighting on the preceding vehicle information as the inter-vehicle distance is smaller or as the inter-vehicle distance is in a decreasing tendency to bring the target trajectory of vehicle 100 closer to the trajectory of the preceding vehicle from the trajectory that gives priority to ride quality. In this way, microcomputer 510 reduces the deviation between the trajectory of vehicle 100 and the trajectory of the preceding vehicle and prevents the senses of discomfort and anxiety of the passenger of vehicle 100.

Accordingly, both of comfortable ride quality of vehicle 100 and the capability to naturally follow the preceding vehicle can be satisfied.

Microcomputer 510 then advances to step S752 and determines the weighting on the preceding vehicle information based on the accuracy of recognition of the road shape performed by external environment recognition unit 300.

In a case in which the road shape on which vehicle 100 runs is recognized by camera 340 included in external environment recognition unit 300, the accuracy of recognition of the road shape degrades if performance of camera 340 is poor, and the accuracy of generation of the target trajectory based on a result of recognition of the road shape is degraded.

Thus, microcomputer 510 brings the target trajectory closer to the trajectory of the preceding vehicle by increasing the weighting on the preceding vehicle running information as the performance of camera 340 is poorer and as the accuracy of recognition of the road shape is lower.

Here, the performance of camera 340 is specified based on the number of pixels of a solid-state image sensor, brightness of a lens, sensitivity, and the like.

The accuracy of recognition of the road shape performed by camera 340 is also worsened in a state of poor weather such as when it is raining or in a state in which the surroundings of vehicle 100 are dark. Thus, microcomputer 510 can increase the weighting on the preceding vehicle running information as the weather is worse (as the amount of rainfall increases) or as the surroundings are darker.

When a centerline, a lane line, or the like on a road is unclear due to fading or the like, microcomputer 510 can identify that the accuracy of recognition of the road shape performed by camera 340 is low and increase the weighting on the preceding vehicle running information.

In the case in which the accuracy of recognition of the road shape is low, safer running is more likely to be achieved by causing vehicle 100 to follow the preceding vehicle. Thus, microcomputer 510 increases the weighting on the preceding vehicle information to bring the target trajectory of vehicle 100 closer to the trajectory of the preceding vehicle.

Microcomputer 510 then advances to step S753 and determines the weighting on the preceding vehicle information based on the meandering running tendency or the lane deviation tendency of the preceding vehicle.

In a case in which the meandering running tendency or the lane deviation tendency of the preceding vehicle is strong, causing vehicle 100 to follow the preceding vehicle will impair running safety and comfort of vehicle 100.

Thus, microcomputer 510 decreases the weighting on the preceding vehicle running information as the meandering running tendency or the lane deviation tendency of the preceding vehicle is stronger, and as a result, prevents the trajectory of the preceding vehicle from affecting the target trajectory of vehicle 100, and ensures running safety and comfort of vehicle 100.

In other words, microcomputer 510 decreases the weighting on the preceding vehicle running information in a case in which the preceding vehicle corresponds to predetermined meandering running than in a case in which the preceding vehicle does not correspond to the predetermined meandering running.

Microcomputer 510 then advances to step S754 and determines the weighting on the preceding vehicle information based on the road shape on which vehicle 100 runs.

Here, microcomputer 510 decreases the weighting on the preceding vehicle running information as the curvature of the road on which vehicle 100 runs is larger, in other words, as a forward curve is sharper.

Note that microcomputer 510 can reduce the weighting on the preceding vehicle running information as a maximum value, an average value, or the like of the curvature of the road within a predetermined distance ahead of vehicle 100 is larger.

In a case in which vehicle 100 runs a sharp curve with a large curvature, the lateral acceleration or lateral jerk increases, which easily leads to deterioration in ride quality of vehicle 100. Thus, improvement in ride quality is more desirable than decreasing the sense of discomfort caused by a departure of the target trajectory of vehicle 100 from the trajectory of the preceding vehicle.

Thus, microcomputer 510 ensures ride quality at a sharp curve by reducing the weighting on the preceding vehicle running information as the road curvature is larger.

Microcomputer 510 then advances to step S755 and determines a final single weighting from set values of the four weightings determined based on the inter-vehicle distance, the accuracy of recognition of the road shape, the meandering running tendency or the lane deviation tendency of the preceding vehicle, and the road shape (curvature), respectively.

Here, microcomputer 510 can use the maximum value, average value, or the like of each of the weightings, for example, as the final weighting.

Alternatively, microcomputer 510 can determine the final weighting based on some of the respective weightings obtained in step S751 to step S754.

Alternatively, microcomputer 510 can determine the final weighting by correcting a weighting basic value obtained from at least one of the weighting based on the inter-vehicle distance, the weighting based on the relative vehicle speed, and the weighting based on the road curvature, for example, in accordance with the weighting based on the accuracy of recognition of the road shape and/or the weighting based on the meandering running tendency or the lane deviation tendency of the preceding vehicle.

Microcomputer 510 obtains the weighting on the preceding vehicle information (the term in which running of the preceding vehicle is considered) from the inter-vehicle distance, the relative vehicle speed, and the like in step S705 in the flowchart of FIG. 4, and then advances to step S706.

In step S706, microcomputer 510 reflects the weighting on the preceding vehicle information to design the target trajectory including the term based on the road shape, the term based on movement of the host vehicle, and the term in which running of the preceding vehicle is considered.

Accordingly, the target trajectory of vehicle 100 transitions between the trajectory that gives priority to ride quality and the trajectory of the preceding vehicle in accordance with the weighting on the preceding vehicle information, which satisfies both comfortable ride quality and the capability to naturally follow the preceding vehicle.

The target trajectory of vehicle 100 is expressed as a sequence of a finite number of points or an n-dimensional function, for example.

Microcomputer 510 then determines an arrangement of the sequence of a finite number of points or respective coefficients in the n-dimensional function as a trajectory plan.

Hereinafter, an example of expressing trajectory points with a difference equation will be described as an example of a trajectory design method.

An expression of trajectory points with a difference equation is Expression 1, for example.

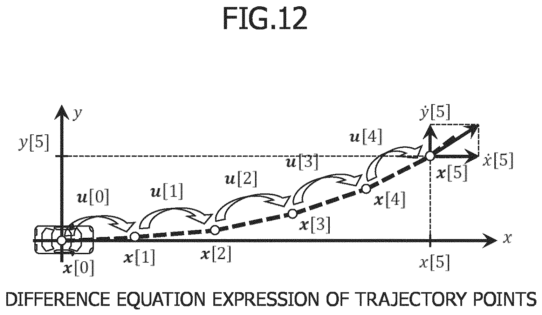

FIG. 12 shows that a trajectory point x[n+1] at time n+1 is obtained by adding a time-changed value to a trajectory point x[n] at time n in the difference equation expression.

[Expression 1]

$$x[k+1] = A_d x[k] + B_d u[k]$$

$$\text{STATE } x = [x_1 x_2 x_3 y_1 y_2 y_3]^T := [x \dot{x} \ddot{x} y \dot{y} \ddot{y}]^T$$

$$\text{INPUT } u = [u_1 u_2]^T$$

$$A_d = \begin{bmatrix} 1 & T & T^2/2 & 0 & 0 & 0 \\ 0 & 1 & T & 0 & 0 & 0 \\ 0 & 0 & 1 & 0 & 0 & 0 \\ 0 & 0 & 0 & 1 & T & T^2/2 \\ 0 & 0 & 0 & 0 & 1 & T \\ 0 & 0 & 0 & 0 & 0 & 1 \end{bmatrix}, \quad B_d = \begin{bmatrix} T^3/6 & 0 \\ T^2/2 & 0 \\ T & 0 \\ 0 & T^3/6 \\ 0 & T^2/2 \\ 0 & T \end{bmatrix}$$

Then, microcomputer 510 can design the target trajectory of vehicle 100 by obtaining an input sequence u[0], u[1], ..., and u[N-1].

Here, microcomputer 510 obtains such an input sequence u[0], u[1], ..., and u[N-1] that minimizes an evaluation function J(x, u) shown in Expression 2.

[Expression 2]

$$J(x, u) = \varphi(x[N]) + \sum_{k=0}^{N-1} \mathcal{L}(x[k], u[k], k)$$

The target trajectory is designed such that an object is accomplished when the above-described evaluation function J(x, u) is minimized.

For example, in the case of the term in which running of the preceding vehicle is considered, the target trajectory is designed such that the value of the evaluation function J(x, u) is smaller as the target trajectory passes closer to the position of the preceding vehicle.

Note that microcomputer 510 can appropriately select and use a publicly known technique such as the steepest descent method, conjugate gradient method, Newton method, or quasi-Newton method as a method for obtaining the input sequence u[0], u[1], ..., and u[N-1].

When designing the target trajectory in step S706, microcomputer 510 gives higher priority to accomplishment of an object such as decreasing the distance from the preceding vehicle (in other words, bringing the host vehicle running route closer to the preceding vehicle running route) as the weighting on the term in which running of the preceding vehicle is considered is larger, and relatively postpones trajectory designing that leads to improvement in ride quality, such as decreasing the lateral acceleration during a turning.

In other words, microcomputer 510 gives higher priority to bringing the target trajectory of vehicle 100 closer to the trajectory of the preceding vehicle as the weighting on the term in which running of the preceding vehicle is considered is larger.

In contrast, when designing the target trajectory, microcomputer 510 gives higher priority to trajectory designing that leads to improvement in ride quality, such as decreasing the lateral acceleration during a turning, as the weighting on the term in which running of the preceding vehicle is considered is smaller, and postpones the object such as decreasing the distance between vehicle 100 and the preceding vehicle.

In other words, microcomputer 510 gives higher priority to trajectory designing that leads to improvement in ride quality, such as decreasing the lateral acceleration during a turning, as the weighting on the term in which running of the preceding vehicle is considered is smaller.

After carrying out the target trajectory designing in step S706, microcomputer 510 advances to step S707 to identify whether the designed target trajectory meets a predetermined requirement.

For example, in step S707, microcomputer 510 identifies whether the designed target trajectory meets any of the following requirements, for example:

- the sum of values of respective terms of indexes for generating the trajectory is a minimum;
- the sum of the values of the respective terms of indexes for generating the trajectory is smaller than a designated value; and
- each of the values of the respective terms of indexes for generating the trajectory is smaller than the designated value.

When identifying in step S707 that the designed target trajectory meets none of the predetermined requirements, microcomputer 510 returns to step S706 to perform the trajectory designing again.

When identifying that the designed trajectory meets any of the predetermined requirements, microcomputer 510 fixes the latest target trajectory as the final target trajectory and terminates the present routine.

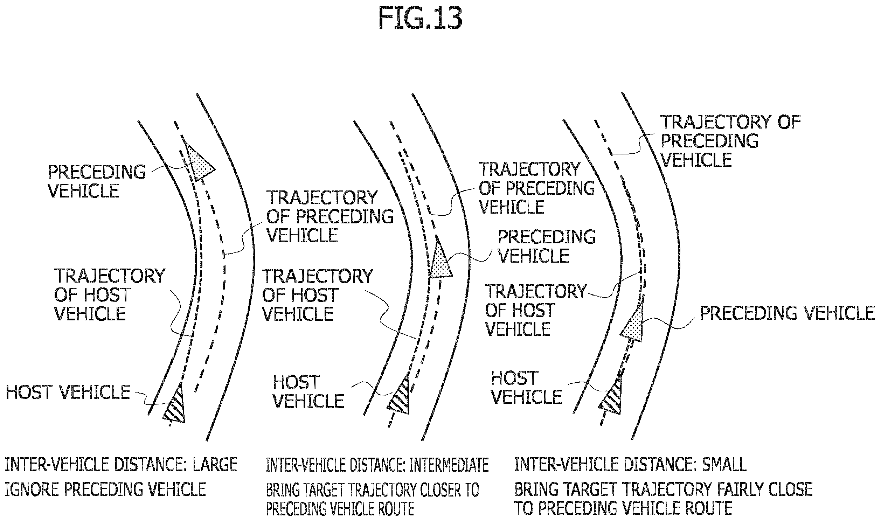

FIG. 13 illustrates differences in target trajectory depending on differences in inter-vehicle distance when the weighting on the term in which running of the preceding vehicle is considered is set to be variable based on the inter-vehicle distance.

The left end of FIG. 13 shows a target trajectory in a state in which the inter-vehicle distance is sufficiently large and in which the trajectory of the preceding vehicle is substantially ignored when the target trajectory is designed.

In this case, the target trajectory is designed such that the lateral acceleration or the lateral jerk when vehicle 100 turns is minimized. As a result, the turning curvature of the target trajectory is smaller than the turning curvature of the trajectory of the preceding vehicle and excellent ride quality of vehicle 100 is achieved.

The center of FIG. 13 shows a target trajectory in a state in which the inter-vehicle distance becomes a distance of an intermediate degree and in which weighting setting functions so as to bring the target trajectory closer to the trajectory of the preceding vehicle.

In this case, the target trajectory is brought closer to the trajectory of the preceding vehicle than to the trajectory on which the most excellent ride quality can be obtained shown at the left end of FIG. 13. Thus, comfortable ride quality can be maintained while easing senses of discomfort and anxiety caused by vehicle 100 tracing a trajectory departed from the preceding vehicle.

The right end of FIG. 13 shows a state in which the inter-vehicle distance reaches the smallest level and in which the target trajectory is brought fairly closer to the trajectory of the preceding vehicle.

In this case, the deviation between the trajectory of vehicle 100 and the trajectory of the preceding vehicle is likely to cause senses of discomfort and anxiety due to the short inter-vehicle distance. Thus, bringing the target trajectory fairly closer to the trajectory of the preceding vehicle can sufficiently reduce the senses of discomfort and anxiety and can improve ride quality as compared with the case in which vehicle 100 traces the trajectory of the preceding vehicle.

That is, microcomputer 510 generates the target trajectory of vehicle 100 not only considering running of the preceding vehicle but also based on the road shape and the indexes related to movement of vehicle 100. Thus, running with more comfortable ride quality than in the case of tracing the trajectory of the preceding vehicle can be achieved, and both comfortable ride quality and the capability to naturally follow the preceding vehicle can be satisfied.

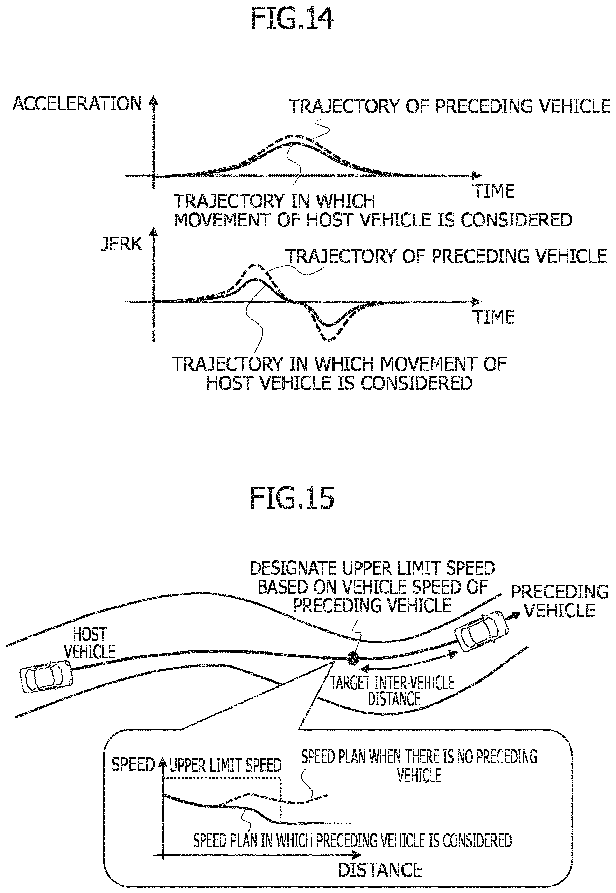

FIG. 14 shows that in a case of causing vehicle 100 to follow the trajectory in which the road shape and the indexes related to movement of vehicle 100 are considered, the lateral acceleration and the lateral jerk become smaller than in the case of causing vehicle 100 to follow the trajectory of the preceding vehicle, which improves ride quality.

FIG. 15 is a diagram describing a speed plan for an occasion of causing vehicle 100 to follow the preceding vehicle.

Microcomputer 510 assigns an upper limit vehicle speed determined based on the vehicle speed of the preceding vehicle to a reference spot behind the position of the preceding vehicle by a target inter-vehicle distance.

Then, microcomputer 510 can cause vehicle 100 to follow the preceding vehicle by implementing the speed plan such that the target vehicle speed of vehicle 100 at the reference spot does not exceed the assigned upper limit speed.

Here, microcomputer 510 can calculate the target inter-vehicle distance that specifies the spot to which the upper limit vehicle speed is assigned, based on the speed of vehicle 100 in accordance with Expression 3.

Target inter-vehicle distance = offset value + inter-vehicle time $\times$ vehicle speed of host vehicle          Expression 3

In Expression 3, the offset value and the inter-vehicle time are fixed values stored in a nonvolatile memory of microcomputer 510.

Note that microcomputer 510 can implement the speed plan assuming that the target inter-vehicle distance is a fixed value, and can employ a calculation method other than Expression 3.

Microcomputer 510 uses the vehicle speed of the preceding vehicle as the upper limit speed to be assigned to the reference spot behind the position of the preceding vehicle by the target inter-vehicle distance. Accordingly, vehicle 100 will run at the position behind the preceding vehicle by the target inter-vehicle distance when the time elapses sufficiently, and inter-vehicle control can be achieved.

Furthermore, microcomputer 510 can increase convergence to the target inter-vehicle distance by setting the upper limit speed in accordance with Expression 4 for adjusting the upper limit speed based on a deviation between an actual inter-vehicle distance and the target inter-vehicle distance.

Upper limit speed = vehicle speed of preceding vehicle + gain $\times$ (actual inter-vehicle distance - target inter-vehicle distance)          Expression 4

Then, in the case of causing vehicle 100 to follow the preceding vehicle, microcomputer 510 can perform only the speed plan again in a later stage for each of the trajectory points shown in FIG. 12 and assign the upper limit speed calculated in accordance with Expression 4 above as the upper limit speed for each of the trajectory points in the course of the speed plan.

Here, microcomputer 510 can also achieve the speed plan based on the upper limit speed by adding a term in which the upper limit speed is considered into the evaluation function shown in Expression 2.

Note that microcomputer 510 can use a barrier function and a slack variable in the case of adding the term in which the upper limit speed is considered into the evaluation function.

Next, a principle that can satisfy both comfortable ride quality and the capability to naturally follow a preceding vehicle through the trajectory plan and speed plan described above will be described.

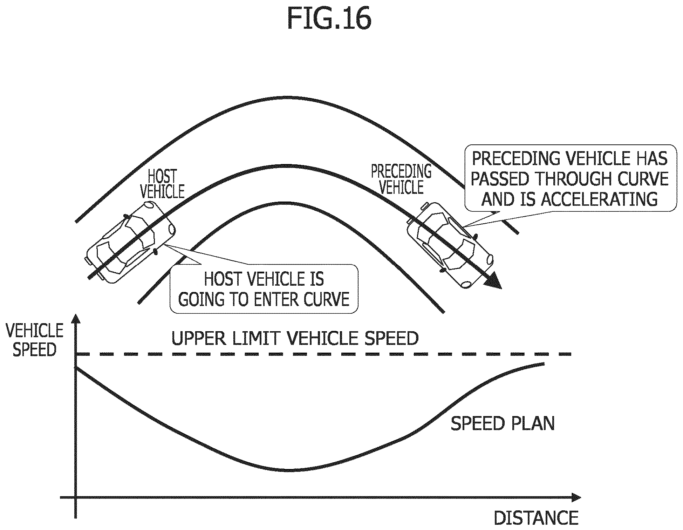

FIG. 16 is a scene in which vehicle 100 and a preceding vehicle are running on a road including a curve, and is a state in which vehicle 100 is going to enter the curve, while the preceding vehicle has passed through the curve and is accelerating.

When priority is given to the capability to follow the preceding vehicle in the running control on vehicle 100 at this time, vehicle 100 will enter the curve while accelerating in conformity with the speed of the preceding vehicle, and ride quality of vehicle 100 at the curve will not be considered.

In contrast, in the trajectory and speed plan in which the information related to the running position or the running history of the preceding vehicle is used, microcomputer 510 can plan the trajectory and speed while ignoring the preceding vehicle in some cases although considering the running position or the running history of the preceding vehicle.

In the situation shown in FIG. 16 and in a case in which the upper limit speed of vehicle 100 is set based on the vehicle speed of the preceding vehicle, microcomputer 510 can determine the speed of vehicle 100 within a range not exceeding the upper limit speed considering ride quality in the speed plan of vehicle 100 as shown at a lower side in FIG. 16. Thus, ride quality of vehicle 100 can be improved.

Here, in a situation in which it is preferable to give priority to ride quality at a curve than to follow-up of the preceding vehicle, such as when there is a curve immediately ahead of vehicle 100, microcomputer 510 can reduce a weighting for conforming to running of the preceding vehicle, in other words, a weighting on the term in which running of the preceding vehicle is considered.

Next, a speed plan for addressing a vehicle that cuts in between vehicle 100 and a preceding vehicle will be described.

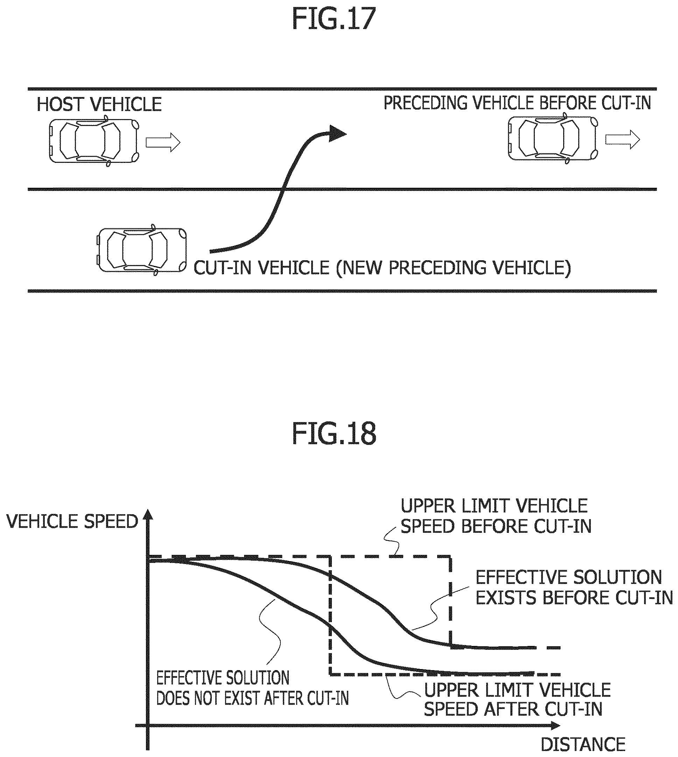

FIG. 17 shows a situation in which when vehicle 100 is following up a preceding vehicle running on the same lane, another vehicle cuts in between vehicle 100 and the preceding vehicle from an adjacent lane.

At this time, deceleration for preventing an approach to the cut-in vehicle might not be in time with the speed plan in which ride quality is considered.

Thus, when cut-in immediately ahead of vehicle 100 occurs, microcomputer 510 can implement a speed plan that gives priority to safety without considering ride quality (in other words, the acceleration and jerk), that is, a speed plan that allows rapid deceleration, which is different from the initial speed plan.

Here, microcomputer 510 can switch to the speed plan that gives priority to safety without considering ride quality when the speed plan in which ride quality is considered is disabled within a range not exceeding the upper limit speed based on a position and a vehicle speed of the cut-in, new preceding vehicle.

In other words, microcomputer 510 can switch to the speed plan that gives priority to safety without considering ride quality when there is no more effective solution for the speed plan in which ride quality is considered.

FIG. 18 shows switching between upper limit speeds before and after cut-in immediately ahead of vehicle 100 occurs.

In the case in which another vehicle cuts in between vehicle 100 and the preceding vehicle, a spot behind the new preceding vehicle by the target inter-vehicle distance transitions to a position closer to the host vehicle, and deceleration required until the inter-vehicle distance reaches the target inter-vehicle distance increases.

In other words, in the case in which another vehicle cuts in between vehicle 100 and the preceding vehicle, the need to decelerate to the speed of the new preceding vehicle in a shorter time (distance) arises, and the speed plan in which ride quality is considered, that is, the speed plan in which deceleration falls within an allowable range, is disabled.

At this time, by switching the speed plan in which ride quality is considered to the speed plan that gives priority to safety, microcomputer 510 enables the inter-vehicle distance from the new preceding vehicle to be ensured although ride quality degrades.

In the above-described embodiment, in the case in which a preceding vehicle is present, microcomputer 510 uses, as the target trajectory of vehicle 100, a single trajectory obtained using the preceding vehicle running information related to the running position or the running history of the preceding vehicle in addition to the road shape and the indexes related to movement of vehicle 100, but the present invention is not limited to such a configuration.

Microcomputer 510 can obtain the host vehicle running route by obtaining a first running route, which is a running route of vehicle 100, based on the road shape and the indexes related to movement of vehicle 100, obtaining a second running route, which is a running route of the preceding vehicle, based on the information related to the running position or the running history of the preceding vehicle, and integrating a route component of the first running route and a route component of the second running route in a predetermined ratio based on the forward information about vehicle 100.

That is, microcomputer 510 can obtain the host vehicle running route that transitions between the running route which gives priority to ride quality and the running route for following up the preceding vehicle by obtaining the two running routes of the running route which gives priority to ride quality and the running route for following the preceding vehicle, respectively, and then integrating the two running routes in a predetermined distribution based on the forward information such as the inter-vehicle distance.

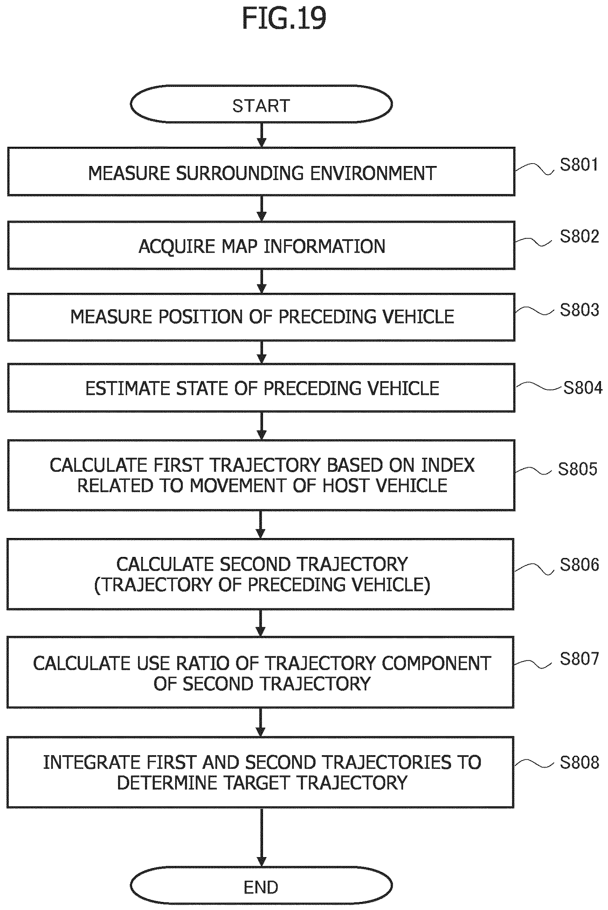

A flowchart of FIG. 19 is a flowchart showing a main routine of processing in which microcomputer 510 (trajectory generation processing unit 530) integrates the two running routes (trajectories) to generate the host vehicle running route (target trajectory).

In steps S801 to S804, microcomputer 510 performs processing similar to step S701 to step S704 in the flowchart of FIG. 4.

That is, in step S801, microcomputer 510 measures a surrounding environment using camera 340 and the like to acquire lane information, obstacle information, information about a centerline, and the like.

In step S802, microcomputer 510 acquires map information including a road curvature, information about the centerline, and the like from a high-precision map, information from a car navigation system, and the like.

In step S803, microcomputer 510 measures the position of the preceding vehicle using camera 340 and the like to acquire information such as the position of the preceding vehicle, the yaw angle, the relative vehicle speed of the preceding vehicle with respect to vehicle 100, and the relative yaw rate.

Furthermore, in step S804, microcomputer 510 performs the state estimation of the preceding vehicle including estimation of the meandering tendency of the preceding vehicle and estimation of the lane deviation tendency of the preceding vehicle.

Then, in step S805, microcomputer 510 obtains a first trajectory as the first running route which is the running route of vehicle 100 based on the road shape and the indexes related to movement of vehicle 100.

Specifically, microcomputer 510 obtains the first trajectory as a trajectory that minimizes the acceleration or jerk of vehicle 100 as much as possible within a runnable region based on the road shape and the obstacle information.

That is, microcomputer 510 does not consider the preceding vehicle information which is the information related to the running position or the running history of the preceding vehicle when obtaining the first trajectory. The first trajectory is obtained as a trajectory that can achieve excellent ride quality within the runnable region.

In step S806, microcomputer 510 obtains the second trajectory as the second running route which is the running route of the preceding vehicle using a result of measurement of the position of the preceding vehicle.

Then, in step S807, microcomputer 510 integrates the first trajectory (first running route) and the second trajectory (second running route) to determine an integration ratio to be used when obtaining a final target trajectory (host vehicle running route), specifically, a use ratio of a trajectory component of the second trajectory (the route component of the second running route) which is the trajectory of the preceding vehicle.

Here, the final target trajectory is brought closer to the second trajectory (the trajectory of the preceding vehicle) as the use ratio of the trajectory component of the second trajectory is larger, in other words, as a use ratio of a trajectory component of the first trajectory is smaller.

In contrast, the final target trajectory is brought closer to the first trajectory as the use ratio of the trajectory component of the second trajectory is smaller, in other words, the use ratio of the trajectory component of the first trajectory is larger.

That is, the final target trajectory continuously transitions between the first trajectory and the second trajectory in accordance with setting of the use ratios.

Microcomputer 510 determines the use ratio of the trajectory component of the second trajectory which is the trajectory of the preceding vehicle (in other words, the route component of the second running route which is the running route of the preceding vehicle) with a characteristic similar to determination of the weighting on the preceding vehicle information, having been described in accordance with the flowchart of FIG. 7.

That is, microcomputer 510 increases the use ratio of the trajectory component of the second trajectory as the inter-vehicle distance decreases.

Microcomputer 510 increases the use ratio of the trajectory component of the second trajectory as the relative vehicle speed (relative vehicle speed = speed of preceding vehicle - speed of host vehicle) decreases, in other words, as the speed of the host vehicle becomes higher than the speed of preceding vehicle.

Microcomputer 510 increases the use ratio of the trajectory component of the second trajectory as the accuracy of recognition of the road shape performed by external environment recognition unit 300 decreases.

In a case in which the preceding vehicle corresponds to predetermined meandering running, microcomputer 510 decreases the use ratio of the trajectory component of the second trajectory as compared to in a case in which the preceding vehicle does not correspond to meandering running.

Microcomputer 510 decreases the use ratio of the trajectory component of the second trajectory as the lane deviation tendency of the preceding vehicle increases, in other words, as the preceding vehicle is more likely to deviate from a lane.

Microcomputer 510 decreases the use ratio of the trajectory component of the second trajectory as the curvature of the road ahead of vehicle 100 increases, in other words, as the curve ahead of vehicle 100 is a sharper curve.

Microcomputer 510 then finally determines the use ratio of the trajectory component of the second trajectory from the plurality of use ratios obtained based on the respective indexes such as the inter-vehicle distance and the relative vehicle speed.

Then, in step S808, microcomputer 510 obtains the target trajectory that transitions between the first trajectory and the second trajectory by allocating the trajectory component of the first trajectory and the trajectory component of the second trajectory based on the use ratio of the trajectory component of the second trajectory.

Note that integration of the first trajectory and the second trajectory is carried out by, for example, using an internally dividing point of a straight line that connects the trajectory point of the first trajectory and the trajectory point of the second trajectory as a trajectory point of the final target trajectory.

In this case, the integration ratio is set as a ratio between a distance from the trajectory point of the first trajectory to the internally dividing point, which specifies the internally dividing point, and a distance from the internally dividing point to the trajectory point of the second trajectory, and the use ratio of the trajectory component of the second trajectory is set as a proportion of the distance from the internally dividing point to the trajectory point of the second trajectory to a space between the trajectory point of the first trajectory and the trajectory point of the second trajectory.

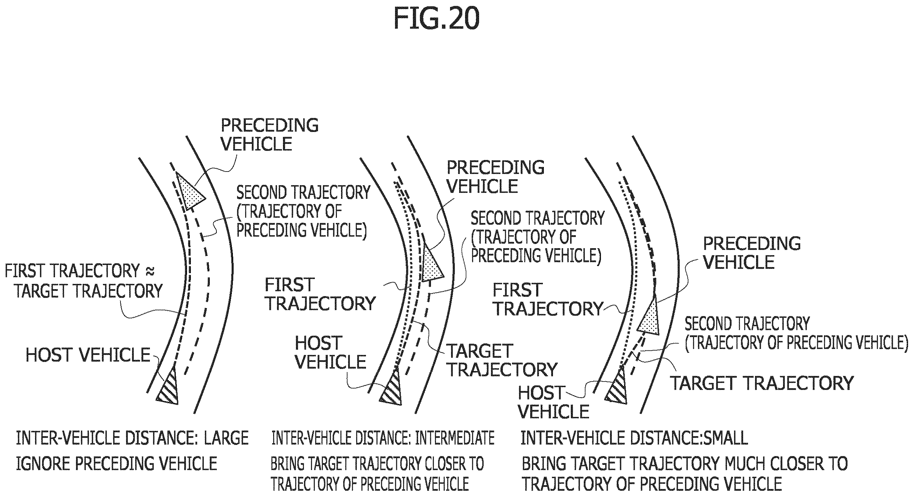

FIG. 20 illustrates differences in target trajectory (in other words, the host vehicle running route) depending on differences in inter-vehicle distance when the use ratio of the trajectory component of the second trajectory (the route component of the second running route) which is the trajectory of the preceding vehicle is set based on the inter-vehicle distance.

The left end of FIG. 20 shows a state in which the inter-vehicle distance is sufficiently large, and the presence of the preceding vehicle can be substantially ignored, and thus, the use ratio of the trajectory component of the second trajectory is set at substantially zero, and the first trajectory is employed substantially as it is as the target trajectory.

In this case, the first trajectory which is trajectory-planned such that the lateral acceleration or the lateral jerk when vehicle 100 turns is minimized is employed substantially as it is as the final target trajectory.

Consequently, the turning curvature of the target trajectory becomes smaller than the turning curvature of the second trajectory which is the trajectory of the preceding vehicle, and excellent ride quality is achieved in vehicle 100.

The center of FIG. 20 shows a state in which the use ratio of the trajectory component of the second trajectory increases because the inter-vehicle distance decreases to a distance of an intermediate degree, and an intermediate trajectory between the first trajectory and the second trajectory is set as the target trajectory.

In this case, the target trajectory is brought closer to the second trajectory which is the trajectory of the preceding vehicle than to the first trajectory on which the most excellent ride quality can be obtained. Thus, comfortable ride quality can be maintained while easing senses of discomfort and anxiety caused by the trajectory of vehicle 100 departing from the trajectory of the preceding vehicle.

The right end of FIG. 20 shows a state in which the inter-vehicle distance reaches the shortest level, and the target trajectory is brought fairly close to the second trajectory which is the trajectory of the preceding vehicle.

In this case, the deviation between the trajectory of vehicle 100 and the trajectory of the preceding vehicle is likely to cause senses of discomfort and anxiety due to the short inter-vehicle distance. Thus, the senses of discomfort and anxiety can be sufficiently reduced by bringing the target trajectory of vehicle 100 fairly close to the second trajectory which is the trajectory of the preceding vehicle, and ride quality can be improved as compared with the case in which vehicle 100 traces the trajectory of the preceding vehicle.

That is, microcomputer 510 integrates the first trajectory that can achieve excellent ride quality and the second trajectory which is the trajectory of the preceding vehicle in the use ratio based on the forward information such as the inter-vehicle distance to obtain the target trajectory of vehicle 100, and causes the target trajectory to continuously transition between the first trajectory and the second trajectory in accordance with the forward information such as the inter-vehicle distance and the relative vehicle speed.

For example, in the case in which the use ratio of the trajectory component of the second trajectory is set based on the inter-vehicle distance, the host vehicle running route continuously transitions from the first running route toward the second running route in accordance with a decrease in inter-vehicle distance.

Thus, both of comfortable ride quality of vehicle 100 and the capability to naturally follow the preceding vehicle can be satisfied.

Respective technical ideas described in the above embodiment can be used in combination as appropriate unless a conflict arises.

Although content of the present invention has been described specifically with reference to the preferable embodiment, it is apparent that one of ordinary skill in the art would adopt various modification aspects based on the basic technical ideas and teachings of the present invention.

For example, the present invention can be configured to allow a driver of vehicle 100 to optionally change the characteristic of microcomputer 510 setting the weighting on the term in which running of the preceding vehicle is considered and the use ratio of the trajectory component of the second trajectory (the route component of the second running route) based on the inter-vehicle distance, the relative vehicle speed, and the like.

In this case, the present invention can be configured such that a plurality of types of maps, each of which defines a correlation between the inter-vehicle distance or the relative vehicle speed and the weighting (ratio) as shown in FIG. 8 to FIG. 11, are stored in a memory of microcomputer 510 and such that the driver of vehicle 100 designates any of the mode of placing importance on ride quality, the mode of placing importance on the capability to follow the preceding vehicle, and the like, thereby switching a map to which microcomputer 510 refers.

In a case in which vehicle 100 is a motortruck, microcomputer 510 can acquire information such as the presence/absence of cargo on board and cargo weight, and can change the weighting on the term in which running of the preceding vehicle is considered and the use ratio of the route component of the second running route.

Specifically, microcomputer 510 decreases the weighting on the term in which running of the preceding vehicle is considered and the use ratio of the route component of the second running route when there is cargo on board as compared to when there is no cargo on board, and decreases the weighting on the term in which running of the preceding vehicle is considered and the use ratio of the route component of the second running route when cargo weight is heavy as compared to when cargo weight is light.

This can prevent cargo shift and ensure running stability of the motortruck.

In a case in which vehicle 100 is a transit vehicle such as a bus or a passenger automobile such as a taxi, microcomputer 510 can acquire information about whether the vehicle is in an out-of-service state or whether a passenger is on board, and can change the weighting on the term in which running of the preceding vehicle is considered and the use ratio of the route component of the second running route.

That is, in a case in which vehicle 100 is not in the out-of-service state and in which a passenger is on board or may get in, microcomputer 510 decreases the weighting on the term in which running of the preceding vehicle is considered and the use ratio of the route component of the second running route, as compared to when vehicle 100 is in the out-of-service state or when no passenger is on board.

REFERENCE SYMBOL LIST

| 100 | Vehicle |
| 200 | Vehicle control system |
| 300 | External environment recognition unit |
| 400 | Vehicle movement detection unit |
| 500 | Vehicle control device |
| 510 | Microcomputer (control unit) |
| 520 | Surrounding situation recognition unit |
| 530 | Trajectory generation processing unit |
| 540 | Vehicle control unit |
| 600 | Vehicle actuator unit |

**Claims**

1. A vehicle control device comprising a control unit that outputs a result of a computation based on input information, wherein
the control unit

   acquires forward information about a host vehicle, and
   in a case in which a preceding vehicle running ahead of the host vehicle is present when a host vehicle running route on which the host vehicle runs is obtained based on a road shape on which the host vehicle runs and an index related to movement of the host vehicle in the forward information, obtains the host vehicle running route using information related to a running position or a running history of the preceding vehicle in the forward information.

2. The vehicle control device according to claim 1, wherein
in a case in which the preceding vehicle running ahead of the host vehicle is present, the control unit obtains the host vehicle running route by adding, as a computation condition, the information related to the running position or the running history of the preceding vehicle to the road shape and the index related to movement of the host vehicle.

3. The vehicle control device according to claim 2, wherein the control unit obtains the host vehicle running route by increasing a weighting on the information related to the running position or the running history of the preceding vehicle as a distance between the host vehicle and the preceding vehicle decreases.

4. The vehicle control device according to claim 2, wherein the control unit obtains the host vehicle running route by increasing a weighting on the information related to the running position or the running history of the preceding vehicle as a relative vehicle speed obtained by subtracting a vehicle speed of the host vehicle from a vehicle speed of the preceding vehicle decreases.

5. The vehicle control device according to claim 2, wherein the control unit obtains the host vehicle running route by increasing a weighting on the information related to the running position or the running history of the preceding vehicle as accuracy of recognition of the road shape decreases.

6. The vehicle control device according to claim 2, wherein the control unit obtains the host vehicle running route by reducing a weighting on the information related to the running position or the running history of the preceding vehicle in a case in which the preceding vehicle corresponds to predetermined meandering running than in a case in which the preceding vehicle does not correspond to the predetermined meandering running.

7. The vehicle control device according to claim 2, wherein the control unit obtains the host vehicle running route by reducing a weighting on the information related to the running position or the running history of the preceding vehicle as a lane deviation tendency of the preceding vehicle increases.

8. The vehicle control device according to claim 2, wherein the control unit obtains the host vehicle running route by reducing a weighting on the information related to the running position or the running history of the preceding vehicle as a curvature of a road ahead of the host vehicle increases.

9. The vehicle control device according to claim 1, wherein the control unit obtains the host vehicle running route by:

   obtaining a first running route, which is a running route of the host vehicle, based on the road shape and the index related to movement of the host vehicle,
   obtaining a second running route, which is a running route of the preceding vehicle, based on the information related to the running position or the running history of the preceding vehicle, and
   integrating a route component of the first running route and a route component of the second running route in a predetermined ratio based on the forward information.

10. The vehicle control device according to claim 9, wherein the control unit obtains the host vehicle running route by increasing a use ratio of the route component of the second running route as a distance between the host vehicle and the preceding vehicle decreases.

11. The vehicle control device according to claim 9, wherein the control unit obtains the host vehicle running route by increasing a use ratio of the route component of the second running route as a relative vehicle speed obtained by subtracting a vehicle speed of the host vehicle from a vehicle speed of the preceding vehicle decreases.

12. The vehicle control device according to claim 9, wherein the control unit obtains the host vehicle running route by increasing a use ratio of the route component of the second running route as accuracy of recognition of the road shape decreases.

13. The vehicle control device according to claim 9, wherein the control unit obtains the host vehicle running route by reducing a use ratio of the route component of the second running route in a case in which the preceding vehicle corresponds to predetermined meandering running than in a case in which the preceding vehicle does not correspond to the predetermined meandering running.

14. The vehicle control device according to claim 9, wherein the control unit obtains the host vehicle running route by reducing a use ratio of the route component of the second running route as a lane deviation tendency of the preceding vehicle increases.

15. The vehicle control device according to claim 9, wherein the control unit obtains the host vehicle running route by reducing a use ratio of the route component of the second running route as a curvature of a road ahead of the host vehicle increases.

16. The vehicle control device according to claim 1, wherein the index related to movement of the host vehicle is a physical quantity related to an acceleration of the host vehicle.

17. The vehicle control device according to claim 1, wherein the control unit causes the host vehicle running route to transition, based on the forward information, between a first running route and a second running route, in which the first running route is a running route of the host vehicle based on the road shape on which the host vehicle runs and the index related to movement of the host vehicle, and the second running route is a running route of the preceding vehicle based on the information related to the running position or the running history of the preceding vehicle.

18. The vehicle control device according to claim 17, wherein the control unit brings the host vehicle running route closer to the second running route from the first running route as a distance between the host vehicle and the preceding vehicle decreases.

19. The vehicle control device according to claim 17, wherein the control unit brings the host vehicle running route closer to the second running route from the first running route as a relative vehicle speed obtained by subtracting a vehicle speed of the host vehicle from a vehicle speed of the preceding vehicle decreases.

20. A vehicle control method to be executed by a control unit mounted in a host vehicle, the vehicle control method comprising:

acquiring, by the control unit, forward information about the host vehicle; and

in a case in which a preceding vehicle running ahead of the host vehicle is present when a host vehicle running route on which the host vehicle runs is obtained based on a road shape on which the host vehicle runs and an index related to movement of the host vehicle in the forward information, obtaining, by the control unit, the host vehicle running route using information related to a running position or a running history of the preceding vehicle in the forward information.

21. A vehicle control system comprising:

a forward information acquisition unit that acquires forward information about a host vehicle;

a control unit that outputs a result of a computation based on input information, wherein

in a case in which a preceding vehicle running ahead of the host vehicle is present when a host vehicle running route on which the host vehicle runs is obtained based on a road shape on which the host vehicle runs and an index related to movement of the host vehicle in the forward information, the control unit obtains the host vehicle running route using information related to a running position or a running history of the preceding vehicle in the forward information; and

a vehicle actuator unit that causes the host vehicle to run in response to a control command for causing the host vehicle to run based on the host vehicle running route.

# FIG.1

EP 4 631 814 A1

# FIG.2

TRAVELING DIRECTION
OF PRECEDING VEHICLE

DEVIATION FROM
TRAVELING DIRECTION
OF PRECEDING VEHICLE

POSITION OF
PRECEDING VEHICLE

DISTANCE FROM
PRECEDING VEHICLE

PAST POSITION OF
PRECEDING VEHICLE

TRAJECTORY OF
PRECEDING VEHICLE

TRAVELING DIRECTION
OF TRAJECTORY OF HOST VEHICLE

DISTANCE FROM
PAST POSITION OF
PRECEDING VEHICLE

HOST VEHICLE

# FIG.3

EP 4 631 814 A1

# FIG.4

START

MEASURE SURROUNDING ENVIRONMENT — S701

ACQUIRE MAP INFORMATION — S702

MEASURE POSITION OF PRECEDING VEHICLE — S703

ESTIMATE STATE OF PRECEDING VEHICLE — S704

DETERMINE WEIGHTING ON PRECEDING VEHICLE INFORMATION — S705

DESIGN TRAJECTORY — S706

DOES DESIGNED TRAJECTORY MEET REQUIREMENT? — S707

NO

YES

END

# FIG.5

AMOUNT OF ANGULAR
DIVERGENCE

AMOUNT OF
POSITIONAL
DIVERGENCE

CENTERLINE

AMOUNT OF
DIVERGENCE AT
PAST POSITION

# FIG.6

ESTIMATED
YAW RATE

CENTERLINE

CURVATURE OF CENTERLINE

ESTIMATED HORIZONTAL
ACCELERATION

ESTIMATED
ACCELERATION

# FIG.7

```
                    ┌──────────────┐
                    │    START     │
                    └──────┬───────┘
                           │
                           ▼
    ┌─────────────────────────────────────────────────┐
    │   DETERMINE WEIGHTING BASED ON PRECEDING         │──── S751
    │        VEHICLE RELATIVE INFORMATION              │
    └─────────────────────┬───────────────────────────┘
                          │
                          ▼
    ┌─────────────────────────────────────────────────┐
    │        DETERMINE WEIGHTING BASED ON              │──── S752
    │            RECOGNITION ACCURACY                  │
    └─────────────────────┬───────────────────────────┘
                          │
                          ▼
    ┌─────────────────────────────────────────────────┐
    │ DETERMINE WEIGHTING BASED ON MEANDERING RUNNING  │──── S753
    │     TENDENCY OR LANE SEPARATION TENDENCY         │
    │             OF PRECEDING VEHICLE                 │
    └─────────────────────┬───────────────────────────┘
                          │
                          ▼
    ┌─────────────────────────────────────────────────┐
    │   DETERMINE WEIGHTING BASED ON ROAD SHAPE        │──── S754
    └─────────────────────┬───────────────────────────┘
                          │
                          ▼
    ┌─────────────────────────────────────────────────┐
    │        DETERMINE FINAL WEIGHTING                 │──── S755
    └─────────────────────┬───────────────────────────┘
                          │
                          ▼
                    ┌──────────────┐
                    │     END      │
                    └──────────────┘
```

24

FIG.8

WEIGHTING

0    INTER-VEHICLE DISTANCE

FIG.9

WEIGHTING

0    INTER-VEHICLE DISTANCE

# FIG.10

WEIGHTING

0

INTER-VEHICLE DISTANCE

# FIG.11

WEIGHTING

−

0

+

RELATIVE VEHICLE SPEED

(RELATIVE VEHICLE SPEED =
VEHICLE SPEED OF PRECEDING VEHICLE -
VEHICLE SPEED OF HOST VEHICLE)

# FIG.12

DIFFERENCE EQUATION EXPRESSION OF TRAJECTORY POINTS

# FIG.13

PRECEDING VEHICLE

TRAJECTORY OF PRECEDING VEHICLE

TRAJECTORY OF HOST VEHICLE

HOST VEHICLE

INTER-VEHICLE DISTANCE: LARGE
IGNORE PRECEDING VEHICLE

TRAJECTORY OF PRECEDING VEHICLE

TRAJECTORY OF HOST VEHICLE

HOST VEHICLE

PRECEDING VEHICLE

INTER-VEHICLE DISTANCE: INTERMEDIATE
BRING TARGET TRAJECTORY CLOSER TO
PRECEDING VEHICLE ROUTE

TRAJECTORY OF PRECEDING VEHICLE

PRECEDING VEHICLE

TRAJECTORY OF HOST VEHICLE

PRECEDING VEHICLE

HOST VEHICLE

INTER-VEHICLE DISTANCE: SMALL
BRING TARGET TRAJECTORY FAIRLY CLOSE
TO PRECEDING VEHICLE ROUTE

EP 4 631 814 A1

# FIG.14

ACCELERATION

TRAJECTORY OF PRECEDING VEHICLE

TIME

TRAJECTORY IN WHICH
MOVEMENT OF HOST VEHICLE IS CONSIDERED

JERK

TRAJECTORY OF PRECEDING VEHICLE

TIME

TRAJECTORY IN WHICH MOVEMENT OF
HOST VEHICLE IS CONSIDERED

# FIG.15

DESIGNATE UPPER LIMIT SPEED
BASED ON VEHICLE SPEED OF
PRECEDING VEHICLE

PRECEDING
VEHICLE

HOST
VEHICLE

TARGET INTER-VEHICLE
DISTANCE

SPEED    UPPER LIMIT SPEED

SPEED PLAN WHEN THERE IS NO PRECEDING
VEHICLE

SPEED PLAN IN WHICH PRECEDING VEHICLE IS CONSIDERED

DISTANCE

## FIG.16

HOST VEHICLE

PRECEDING VEHICLE

PRECEDING VEHICLE HAS PASSED THROUGH CURVE AND IS ACCELERATING

HOST VEHICLE IS GOING TO ENTER CURVE

VEHICLE SPEED

UPPER LIMIT VEHICLE SPEED

SPEED PLAN

DISTANCE

# FIG.17

HOST VEHICLE

PRECEDING VEHICLE BEFORE CUT-IN

CUT-IN VEHICLE (NEW PRECEDING VEHICLE)

# FIG.18

VEHICLE SPEED

UPPER LIMIT VEHICLE
SPEED BEFORE CUT-IN

EFFECTIVE SOLUTION
EXISTS BEFORE CUT-IN

EFFECTIVE SOLUTION
DOES NOT EXIST AFTER CUT-IN

UPPER LIMIT VEHICLE
SPEED AFTER CUT-IN

DISTANCE

# FIG.19

START

MEASURE SURROUNDING ENVIRONMENT — S801

ACQUIRE MAP INFORMATION — S802

MEASURE POSITION OF PRECEDING VEHICLE — S803

ESTIMATE STATE OF PRECEDING VEHICLE — S804

CALCULATE FIRST TRAJECTORY BASED ON INDEX RELATED TO MOVEMENT OF HOST VEHICLE — S805

CALCULATE SECOND TRAJECTORY (TRAJECTORY OF PRECEDING VEHICLE) — S806

CALCULATE USE RATIO OF TRAJECTORY COMPONENT OF SECOND TRAJECTORY — S807

INTEGRATE FIRST AND SECOND TRAJECTORIES TO DETERMINE TARGET TRAJECTORY — S808

END

# FIG.20

PRECEDING VEHICLE

SECOND TRAJECTORY (TRAJECTORY OF PRECEDING VEHICLE)

FIRST TRAJECTORY ≈ TARGET TRAJECTORY

HOST VEHICLE

INTER-VEHICLE DISTANCE: LARGE
IGNORE PRECEDING VEHICLE

PRECEDING VEHICLE

SECOND TRAJECTORY (TRAJECTORY OF PRECEDING VEHICLE)

FIRST TRAJECTORY

HOST VEHICLE

TARGET TRAJECTORY

INTER-VEHICLE DISTANCE: INTERMEDIATE
BRING TARGET TRAJECTORY CLOSER TO TRAJECTORY OF PRECEDING VEHICLE

PRECEDING VEHICLE

SECOND TRAJECTORY (TRAJECTORY OF PRECEDING VEHICLE)

FIRST TRAJECTORY

PRECEDING VEHICLE

TARGET TRAJECTORY

HOST VEHICLE

INTER-VEHICLE DISTANCE:SMALL
BRING TARGET TRAJECTORY MUCH CLOSER TO TRAJECTORY OF PRECEDING VEHICLE

## INTERNATIONAL SEARCH REPORT

| International application No. |
| --- |
| **PCT/JP2023/043223** |

### A. CLASSIFICATION OF SUBJECT MATTER

*B60W 30/10*(2006.01)i; *B60W 30/165*(2020.01)i; *B60W 40/02*(2006.01)i; *B60W 40/04*(2006.01)i; *B60W 40/072*(2012.01)i; *B60W 40/114*(2012.01)i
FI: B60W30/10; B60W30/165; B60W40/02; B60W40/04; B60W40/072; B60W40/114

According to International Patent Classification (IPC) or to both national classification and IPC

### B. FIELDS SEARCHED

Minimum documentation searched (classification system followed by classification symbols)

B60W30/10; B60W30/165; B60W40/02; B60W40/04; B60W40/072; B60W40/114

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2000-20896 A (MITSUBISHI JIDOSHA KOGYO KABUSHIKI KAISHA) 21 January 2000 (2000-01-21) paragraphs [0013]-[0055], fig. 1-10 | 1-2, 5-6, 20-21 |
| Y | | 3-19 |
| X | JP 2013-142975 A (DENSO CORPORATION) 22 July 2013 (2013-07-22) abstract, paragraphs [0020]-[0067], fig. 1-7 | 1-2, 20-21 |
| Y | | 3-19 |
| Y | JP 2005-329896 A (NISSAN MOTOR CO., LTD.) 02 December 2005 (2005-12-02) abstract, paragraphs [0007]-[0137], fig. 1-27 | 16 |
| Y | JP 2013-248925 A (HITACHI AUTOMOTIVE SYSTEMS, LTD.) 12 December 2013 (2013-12-12) abstract, paragraphs [0017]-[0073], fig. 1-11 | 16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 February 2024** | **20 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/043223**

| C. | DOCUMENTS CONSIDERED TO BE RELEVANT | |
|---|---|---|
| Category* | Citation of document, with indication, where appropriate, of the relevant passages | Relevant to claim No. |
| Y | WO 2019/026210 A1 (NISSAN MOTOR CO., LTD.) 07 February 2019 (2019-02-07) abstract, paragraphs [0009]-[0070], fig. 1-6 | 17-19 |
| Y | JP 2022-59938 A (SUBARU CORP.) 14 April 2022 (2022-04-14) paragraphs [0015]-[0069], fig. 1-6 | 17-19 |

Form PCT/ISA/210 (second sheet) (July 2022)

# EP 4 631 814 A1

| Patent document cited in search report | | | Publication date (day/month/year) | Patent family member(s) | | | Publication date (day/month/year) |
|---|---|---|---|---|---|---|---|
| JP | 2000-20896 | A | 21 January 2000 | (Family: none) | | | |
| JP | 2013-142975 | A | 22 July 2013 | US abstract, paragraphs [0026]-[0081], fig. 1-7 KR | 2013/0179379 10-2013-0082060 | A1 A | |
| JP | 2005-329896 | A | 02 December 2005 | (Family: none) | | | |
| JP | 2013-248925 | A | 12 December 2013 | US abstract, paragraphs [0029]-[0078], fig. 1-11 WO | 2015/0307100 2013/180206 | A1 A1 | |
| WO | 2019/026210 | A1 | 07 February 2019 | US abstract, paragraphs [0012]-[0074], fig. 1-6 EP KR CN CA | 2020/0223449 3664062 10-2020-0029587 110998691 3071780 | A1 A1 A A A1 | |
| JP | 2022-59938 | A | 14 April 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020002964 A